# EUROPEAN PATENT SPECIFICATION

(11) **EP 1 367 912 B1**
(45) Date of publication and mention of the grant of the patent: **15.07.2009**
(21) Application number: 01997231.4
(22) Date of filing: 23.11.2001
(51) Int. Cl.: A23L 3/365, A23B 4/07

(54) **METHOD AND DEVICE FOR THAWING OF FROZEN OBJECTS CONSISTING OF ORGANIC CELLULAR COMPOUND SUCH AS FOOD**
VERFAHREN UND GERÄT ZUM AUFTAUEN VON AUS ORGANISCHEM ZELLMATERIAL BESTEHENDEN TIEFGEFRORENEN OBJEKTEN WIE NAHRUNGSMITTELN
PROCEDE ET DISPOSITIF POUR LA DECONGELATION DE PRODUITS CONGELES A BASE DE COMPOSES ORGANIQUES CELLULAIRES DU TYPE ALIMENTS

(30) Priority: 23.11.2000 SE 0004294
(43) Date of publication of application: 10.12.2003
(73) Proprietor: SKARHAMN INTERNATIONAL AB, S-401 21 Göteborg (SE)
(72) Inventor: DREWS, Göran, S-416 73 Göteborg (SE)
(74) Representative: Mossmark, Anders Lennart
(86) International application number: PCT/SE2001/002586
(87) International publication number: WO 2002/041713

(56) References cited:
- GB-A- 2 314 173
- US-A- 4 376 131
- US-A- 4 674 402
- US-A- 4 898 741
- DATABASE WPI Week 200004, Derwent Publications Ltd., London, GB; AN 2000-042385, XP002978847 'Steam circulation arrangement in thawing apparatus - has thawing chamber with thawing steamy inflow and outflow opening which is connected through vapor circulating flow line' & JP 11 290 046 A (KYOWA REION SEIZO KK) 26 October 1999

## Description

### TECHNICAL FIELD:

Method and device for thawing deep-frozen goods consisting of an organic cell mass such as foodstuffs. The invention is particularly intended for use when thawing animal products, such as fish and meat of various kinds.

### BACKGROUND OF THE INVENTION:

When thawing deep-frozen products, particularly foodstuffs and animal products, but also certain vegetables and prepared foodstuffs, it is important for the preservation of a good quality of the product in question that the thawing takes place in a slow process. In this connection, a similar temperature shall as far as possible be maintained throughout the entire mass of goods. The reason for this is that for most foodstuffs, and in particular animal products, the only possibility for thawing the goods is to supply heat from outside; thawing by means of molecule activation in the entire mass of goods by means of microwaves has not been found to produce any satisfactory results. If heat in that connection is supplied too intensively, the surface layer of the goods will thaw, whereas the core of the goods still has a low temperature below the freezing point. This implies that the thawed surface layer is cooled and may come to regelate, something which is highly disadvantageous as it results in cellular rupture with a considerable qualitative impairment. If, on the other hand, such a strong heating is maintained that regelation will not occur, the surface layer will be heated to a temperature which is higher than the one that is suitable for a storage condition, which results in a qualitative impairment of the foodstuffs as well as a risk of increased growth of bacteria. Thus, a slow thawing at a restricted temperature is of great importance, in particular as regards animal products.

In the US patent A 4 898 741 (Heide), a method for thawing deep-frozen foodstuffs is proposed. The method is based on the goods being situated in a humid atmosphere by an air flow with a rate of speed of approximately 5 m/sec and with an automatic control of the thawing process by means of temperature sensors which are situated in the core of the goods. Furthermore, it is specified that the humidity is maintained by injecting water with a temperature which is lower that 14° C and by an air temperature of below 12° C with termination of the thawing process when the core temperature is between -1° C and -2° C whereupon the water temperature shall be below 12° C and the air temperature below 6° C. Furthermore, it is specified that during a storage condition, the goods shall have a temperature of approximately +1° C in a humid atmosphere. The method is declared to be particularly intended for thawing fish which has been stored at a temperature of approximately -38° C and preferably fish which has been deep-freezed before rigor mortis has set in.

In the document, references are being made to recommendations for deep-freezing and thawing fish from Norwegian Board of Food which define that when such deep-freezed fish is thawed in water, the water temperature shall be between +14° C and +17° C and if the fish is thawed in humidity-saturated air, the air speed shall exceed 5 m/sec and the air have a temperature of between +14° C and +17° C. On the whole, the specified characteristics of the method according to the document correspond with said recommended data, to which there however is the additional characteristic that measurement of the core temperature of the goods is utilized for controlling the thawing process. With that, the new characteristic of the invention in question is essentially limited to the fact that the core temperature is measured and the measurement result to some extent is allowed to control the thawing process. However, as is apparent from the document, this control is essentially limited to the fact that the actual thawing process is interrupted when the core temperature reaches approximately -1° C to -2° C, whereupon the process is transformed into a storage condition where the temperature of the goods is kept to around approximately +1° C during maintenance of a humid atmosphere.

A thawing process which is carried out in an incorrect manner can result in a qualitative impairment of the deep-freezed goods. Among the most delicate products are fish and shellfish which have been deep-freezed quickly to a very low temperature in the freshest possible condition and at least before rigor mortis has set in with a resulting stiffness in the muscle fibres. A thawing process which is carried out in this manner is essential in order for the raw material to keep its quality. Furthermore, in order to produce the best possible result after the preparation of the raw material, it is required that the thawing is carried out in such manner that no considerable qualitative impairment will occur. During said quick deep-freezing, the formed ice crystals become small and such cellular rupture is avoided which is caused if the crystals are allowed to grow big, which occurs during a slow deep-freezing. If, however, the thawing is carried in an unsuitable manner, a renewed formation of crystals can set in and produce large ice crystals which will rupture certain cells. This results in a certain degree of drying and that the meat becomes leathery and loses its freshness. The principal rule for avoiding this is to let the thawing take place in a slow manner. As previously mentioned, the energy for the thawing can only be drawn from the environment, thus with the thawing process progressing from the surface of the goods and further into its core. During slow thawing in a comparatively low temperature, the temperature differences between the exterior and the interior sections of the goods will in that connection be limited, which reduces the risk of regelation of thawed sections and formation of large ice crystals.

The above-mentioned applies particularly for foodstuffs which are based on fish and shellfish but to a large extent also meat and particularly meat from poultry but also from cattle and game. As regards the foodstuffs, vegetables are not very delicate.

To some extent, the demand for a slow thawing is contradictory to the demand for a rational treatment of the raw material. The fact that a long time passes from the moment when the thawing starts until further preparation can begin may be disturbing and particularly if it is difficult to determine in advance how long time the thawing process will take. Since this time period in practice is nearly impossible to estimate exactly and adjust to the often predetermined point of time when further preparation shall occur, it must be controlled that the thawing process transforms into storage in thawed condition at a low temperature. The latter is very important in connection with foodstuffs so that growth of micro-organisms is avoided as far as possible during the storage. Of course, such growth should also be restricted during the thawing process itself, wherein it is important to avoid that parts of the goods are kept at an unsuitably high temperature during longer periods of the thawing process. This too is a reason for letting the thawing take place in a slow manner, thus at a low external temperature. During thawing at higher temperatures, the exterior parts of the goods will be too heated which results in risks as regards the hygiene.

It could be assumed that the described known method can provide an acceptable result as regards the quality within a limited application area, since the method has been described to be particularly applicable when thawing fish, and probably when the parts of the goods have a precise weight and volume, such as in the form of comparatively large, rectangular blocks. Furthermore, as is well known, there is no reason to expect an imperfect result since the method utilizes the basic principle: a slow thawing at a low temperature and, particularly as regards fish, which is sensitive to drying out, at a high atmospheric humidity as well. On the other hand, there is nothing in the method which guarantees that it should be more universally applicable with satisfactory results. As is well known, it does not claim to be applicable for anything else than fish and there is every reason to fear that when thawing fish or other foodstuffs in units with smaller volumes and thin sections, it will result in an insufficient quality as well as a considerable risk of certain parts with a small volume remaining at the temperature which after all is comparatively high, above +10° C during a comparatively long time while the sections with a larger volume are thawed, which increases the risk of bacteria growth. The condition for the method, namely that temperature sensors are situated in the core of the parts of the goods, makes the method less rational. In some cases, this can require that the sensor must be bored into the core of frozen blocks and in other cases, it can require that the stacking of the goods in the thawing space must be carried out with a great deal of care during insertion of the sensors. If these operations are not carried out with proper care, there is a risk of either the thawing process being interrupted before the entire goods volume is thawed or of large parts of the goods being heated to the thawing temperature and being kept at this temperature before the sensors activate transition to the storage temperature. It can be established that the method has not been exploited to any greater extent and that it has not resulted in any noticeable manufacture of thawing devices which function according to the method.

### SUMMARY OF THE INVENTION:

The object of the present invention is to provide a method and a device for thawing particularly foodstuffs with a general application practically regardless of the character, weight and form of the goods and with avoidance of risks of regelation of thawed sections, and risks of exposing sections to an unsuitably high temperature during longer time periods and on the whole to create the best possible opportunities for maintaining a satisfactory hygiene during both the thawing process and the storage process.

The scope of the invention is defined in the claims appended hereto.

In that connection, the invention is based on the fact that the surface temperature of the goods and its various sections is observed accurately and that the measurement results are used in order to control the intensity of the thawing effect, so that surface sections are kept at a comparatively low temperature during the whole thawing process but nevertheless with such a control of the intensity that cooling of the surface sections from the core of the goods is limited during the whole process. In this manner, cold from the internal sections is allowed to "wander out" to the surface sections with maintenance of a temperature in the external sections of the goods within a narrow area. In order to achieve this, means are provided for both heating and cooling of the atmosphere which surrounds the goods.

Furthermore, one very important means is that heating and provision for a high atmospheric humidity is carried out by injecting hot steam in the space in which the goods is situated. It has been shown that utilization of hot steam instead of injection of water during the thawing process provides opportunities to the quick change of the heating effect that a maintenance of the temperature in the surface sections within a narrow temperature interval requires. Furthermore, the steam provides a sterilizing effect on both the surrounding atmosphere and the outermost surface layer of the goods and during trials, it has shown to cause a considerable reduction of growth of micro-organisms in relation to previously known thawing processes. Furthermore, the steam provides a possibility for a complete sterilization and cleaning between the thawing opportunities of the space in which thawing and storage takes place. It shall also be mentioned that the means, which are required in a device for thawing and subsequent storage, namely: means for circulating, heating and cooling the atmosphere, also make such a device suitable for cooling recently prepared foodstuffs and for fermenting doughs. In that connection, it is required that the device is provided with a control equipment, which is adjustable for said various fields of application.

### BRIEF DESCRIPTION OF THE DRAWINGS:

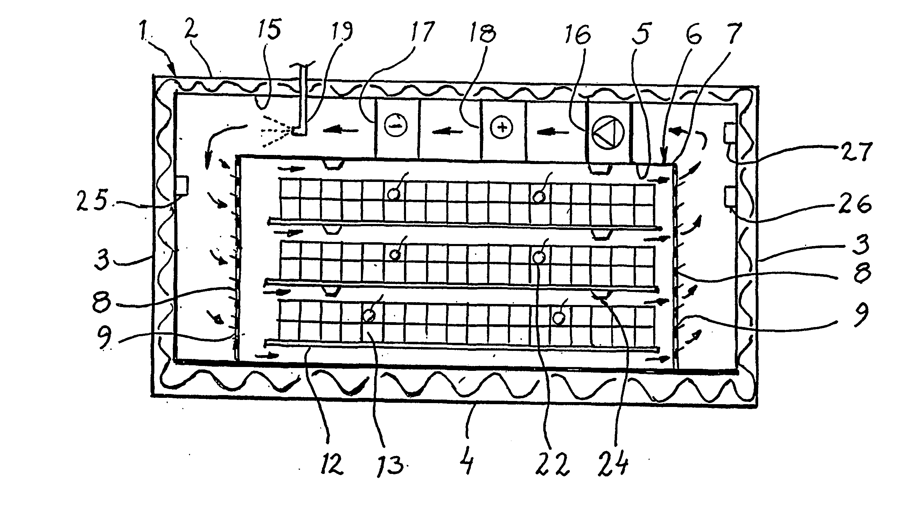

In the following, various methods according to the invention and an embodiment of the device will be described in further detail. In that connection, references will be made to the figure on the appended drawing, which shows a schematic sectional view of the device.

### PREFERRED EMBODIMENTS:

The figure in the drawing shows schematically a longitudinal section of a device for thawing. Its exterior has a rectangular form where the external section is formed by an insulating wall 1. Said wall is essentially closed at its upper side 2, gables 3, bottom 4 and backside, which is situated away from the plane of the paper. The front side, however, which is not shown but shall be situated in front of the plane of the paper, can be opened by means of a door. Inside the room which the wall 1 forms there is a space 5 which is formed by a wall 6 which by means of its upper side 7 and side walls 8 is situated at a distance inside the wall 1, so that a duct is formed outside the space 5 at its upper side and side walls.

The side walls 8 of the wall 6 are provided with flow openings 9 whereas the upper side 7 is closed, as is also the case with the backside, which connects to the backside of the wall 1. The front side, however, can be opened by means of said door.

Inside the space 5, shelves 12 are provided for storage of the goods 13 which is to be prepared. Here, the goods is shown in the form of blocks of frozen products such as fish or other foodstuffs. The shelves are arranged in such manner, and the goods is stacked in such manner, that air ducts extend between the side walls 8 which are provided with the flow openings 9. Instead of shelves, carriages, hooks or other storage devices for the goods can be provided and adjusted to the character of said goods and enabling air flow around the goods. In the duct 15, which is formed between the upper sides 2 and 7, respectively, of the walls 1 and 6, it is shown how a fan unit 16, a radiator 18, a cooling battery 17, and a diffusor 19 for injection of hot steam are installed in a row after one another from right to the left. The diffusor 19 is connected to a steam generator, not shown, which comprises a vessel which can be heated for forming the steam with connection to a conduit for water and valves which make it possible to refill water in the vessel, draw off water from the same and discharge steam through the diffusor 19. Said unit and batteries and diffusor are each shown as consisting of a separate unit, but when necessary, the device can be provided with more units with the described function.

Furthermore, the device is provided with a number of sensors for supervising the relative humidity and the temperature in the space 5 and for supervising the surface temperature of the goods. For supervising the atmospheric humidity, a hygrometer 27 is suitably situated in the duct outside the side wall 8 of the space 5. The sensors for the surface temperature of the goods can be of various kinds for alternative use or use in combination with each other. In that connection, one type can be contact sensors 22 with a temperature sensor bearing directly against the surface of the goods but shielded from influences from the surrounding atmosphere. Suitably, several such.sensors are situated on various places on the goods. Another type of sensor can be contact-free sensors, in the drawing indicated with 24. These are directed towards one or several places on the surface of the goods and are provided to detect the intensity of the heat radiation by means of which the surface temperature can be established. Finally, for determining the surface temperature, temperature sensors 25 and 26 can be provided in the ducts outside the side walls 8 of the space 5. By means of said temperature sensors, the temperature can be measured for air flowing into the goods through one of the side walls and air flowing out after having passed the goods at the other side wall of the space 5 and furthermore, the difference between these two values can also be measured. The cooling that sets in at the passage of the air in the space 5 around the goods constitutes an indication of the surface temperature of the goods. However, the degree of cooling depends on other factors: the temperature of the air flowing in, which however can be measured by means of one of the temperature sensors, the size of the surfaces that the air flow passes and the flow rate of the air. Therefore, in order to provide an adequate value for the surface temperature of the goods, a program of calculation is required which is not merely based on the temperatures and the differential values of the sensors but also on other factors, which in some cases of preparation can be known or which must be indicated before the thawing process begins if one should rely solely on the measurement of temperature in the air flow. Besides, temperature sensors are required for supervising the temperature in the space 5, where the temperature shall be limited.

It is, however, possible to create programs for calculating the temperature based on measurement results from several types of sensors. For reasons of handling, it is desirable that it will not be necessary to provide contact sensors on the goods, yet such sensors probably provide the most exact measurement of temperature.

Furthermore, the device comprises a preferably computerized control device for controlling the operation of the described members and for receiving said measurement results with the control device in that connection being programmed to utilize these for said control. In addition, the control device is provided with operating members for adjustment of the thawing process to various types of goods.

When the thawing process shall start, the goods 13 is put into the space 5 on the shelves 12 or other storage devices which may exist. The fan unit 16 is started and provides an air flow in the duct 15 in the direction of the arrows which are shown in the drawing so that the air flow passes the radiator 18, the cooling battery 17 and the steam diffusor 19 and then turns downwards in the direction of the side wall 8 and through its openings 9 in order to pass through the space 5 in the ducts which are formed between the inserted goods and then out through the openings 9 in the opposite side wall 8 for further transport to the intake side of the fan 16. Next, the humidifying of the atmosphere around the goods and heating of the same initially starts by means of the fact that hot steam is generated in said steam generation unit, which hot steam is ejected through the steam diffusor 19. Thus, the steam is formed by evaporation of water and in this condition, it has a temperature of 100° C or more and the arrangement is such that the steam shall hold a temperature of approximately 80° C when it reaches the inserted goods. When it hits the cooled surfaces of the goods, it will condense and at that moment, it will emit heat to the goods in its surface sections and humidify the goods. As previously mentioned, in connection with the condensation of the hot steam, the hot steam provides a heating of the outermost layer with a sort of strikingly impact and thus provides a sterilizing effect on this, which is important since the risk of the presence of dangerous micro-organisms is greatest in the surface layer since this may get into contact with pollutants in connection with transports and handling. The effect of the steam heating is registered by means of measurement of temperature against the surface of the goods by means of said sensors 22, 24, 25 and 26, which function alternately or in co-operation. At the same time, the relative humidity is measured by means of the hygrometer 27. By means of steam injection, the control device controls the relative atmospheric humidity to lie at a predetermined value, preferably close to 100 %. When this value has been reached and if the predetermined surface temperature on the goods in that connection has not been reached, the radiator 18 starts, so that the temperature in the space 5 is increased. If, on the other hand, steam injection is necessary in order to maintain predetermined degree of atmospheric humidity, and the surface temperature in that connection has a tendency of exceeding a predetermined level, the control device instead activates start of the cooling unit 17. It is suitable that the temperature in the space 5 around the goods is limited to approximately 10-15° C during the thawing process.

Thus, by means of alternating operation of the steam diffusor, the radiator and the cooling battery, respectively, during the operation of the fan, the degree of humidity can be kept within predetermined values as well as the surface temperature can be kept within the predetermined area. In that way, the temperature in the surface sections of the goods can be kept comparatively constant during counteraction of the cooling which the surface sections obtain from the internal sections of the goods during the tendency for equalization of temperature in the goods, which arises when the surface sections are heated from outside.

Whichever temperature area that the control device shall be set to maintain in the surface sections of the goods depends on the character of the goods and certain requirements from those who will prepare the thawed goods further. In order to counteract bacteria growth, it is most advantageous if the surface sections during the thawing process itself are not allowed to thaw completely but are kept at one or a few degrees of freezing temperature. Whichever freezing temperature that applies to various goods depends on the character of said goods and one important factor is the salt content. The higher salt content, the lower the temperature will be at which complete thawing occurs. If, however, 0° C is regarded to be the freezing temperature, then the temperature in the surface layer should be kept within the area of -2° C to -5° C, which would be advantageous from a hygienic point of view and at the same time would prevent thawing of the goods in its surface and result in the risk of regelation due to cooling from the core which is still cooled. However, such a risk of regelation could be alternatively eliminated provided that the control device controlled that the temperature never went down below 0° C in the surface sections after they had thawed. The fact is, that in the device according to the invention, a quick cooling of the surface sections by means of conduction of heat to the colder core sections can be compensated rapidly by means of the steam injection, which results in a considerably greater direct heat effect than what can be obtained by means of air heating or injection of heated, but not vaporized water.

One alternative manner of adjusting the control device for maintaining a temperature which is slightly below the freezing point of the goods during at least the major part of the thawing process is to make the adjustment so that the thawed goods sections are kept at a temperature which is slightly above the freezing point, for example in the area of +1° C to +5° C. Irrespective of which alternative is selected, it is important for the quality of the goods after thawing that the temperature area lies close to the freezing point of the goods, thus slightly above or below the freezing point, which implies that the temperature area should be strictly limited, for example to approximately 3° C. The invention makes this possible by means of the fact that provisions have been made for heating by means of hot steam and in addition, when necessary, by means of hot air and for forced cooling.

When the entire mass of goods is thawed, the surface sections of the goods will no longer be exposed to any cooling from the internal sections of the goods and the demand for supplying heat ceases and the temperature in the surface sections will rather have a tendency to increase due to heat that is stored in the device and heating from outside. If the temperature therefore starts to have a tendency to rise above an additionally predetermined, adjusted value, namely the value for the storage temperature after completed thawing, the control device starts the cooling battery 17 for cooling so that the predetermined temperature for storage is maintained. Suitably, this should be one or a few degrees above the freezing temperature, so that the goods is kept thawed but without such heating that stimulates increased bacteria growth. Thus, this implies that the temperature is kept at for example +1° C to a maximum of +5° C, thus the same temperature that has been defined to be a suitable second alternative for the thawing process. During the storage condition, a certain, however weak, air circulation for equalization of temperature is maintained. If it should be observed by means of the hygrometer 27 that the degree of humidity drops below a predetermined value, the control device starts the steam diffusor, wherein cooling can be required as well. Temperature sensors for measuring the core temperature of the goods are not assumed to be necessary in connection with the invention. However, such can be of use for a more exact determination of when the core is thawed, so that the storage condition shall be activated, than what can be achieved by means of registration of when the demand for heating ceases. Therefore, it shall not be excluded that for certain types of goods, insertion sensors also are provided for the function of the control device.

After completed thawing and when the goods is to be taken out for further preparation, the space 5 is emptied and, when necessary, cleaned. For final cleaning and sterilization, the space is closed and the control device set at a cleaning program, which implies that the steam diffusor is influenced to work during a certain space of time while the fan unit works and the radiator is kept going as well.

It has been mentioned that the device also can be used for cooling ready-cooked foodstuffs which have been exposed to heating. If they subsequently shall be put in cold storage or be deep-freezed for consumption later on, they can be inserted into the space 5. Next, the control device is set at full air circulation by means of the fan unit 16, cooling of the air by means of the cooling battery 17 and setting at a relative humidity which is adjusted to the goods in question. If, for example, this is constituted by ready-cooked dishes, a higher or a lower humidity may be most advantageous depending on the character of said food. The humidifying of the air is achieved by means of the steam diffusor 19.

If the device is intended to be utilized as a fermenting cabinet for doughs, the control device is set in such manner that the fan unit 16 works for a very low air speed and with the radiator 18 in operation so that a predetermined temperature is constantly maintained. This lies within the area of 20-60° C depending on what kind of dough is to be fermented. The atmospheric humidity should preferably be comparatively high.

## Claims

1. Method for thawing deep-frozen goods in an insulated space (5), which goods consists of an organic cell mass
**characterized in that** the atmospheric humidity of the atmosphere in the space (5) is maintained at the predetermined value by injecting water steam in the space with a temperature of essentially 80° C in a process which is controlled by means of measurement of the atmospheric humidity, that the surface temperature of the goods (13) is measured continuously by means of temperature sensors, and that the temperature of the atmosphere is controlled by cooling the airflow alternatively heating the same by means of an operation of units (17/18) which generate cold and heat, respectively, to the airflow in a process which is controlled by means of said measurement of the surface temperature of the goods (13) and adjusted so that the surface temperature of the goods is kept within a predetermined temperature area which is close to the freezing temperature of the goods preferably between -5° C and +5° C, during maintenance of the predetermined value for the atmospheric humidity by means of the control of the steam injection process.

2. Method according to claim 1,
**characterized in that** registration of the surface temperature of the goods (13) is carried out by means of contact-free measurement of temperature by means of radiation sensitive sensors (24).

3. Method according to claim 1,
**characterized in that** the surface temperature of the goods (13) is registered by means of measurement of the temperature of the airflow, which has been directed to sweep over the surface of the goods and **in that** connection is cooled.

4. Method according to claim 3,
**characterized in that** the temperature of said air flow is measured on the one hand when the air flow is blown towards the goods (13) and on the other hand when it has passed the goods, whereupon the surface temperature of the goods is estimated by means of registration of the two measured temperatures, the difference between them and the intensity of the air flow.

5. Method according to claim 1,
**characterized in that** the surface temperature sensors (22) bear against the surface layer of the goods.

6. Method according to any one of claims 1-5,
**characterized in that** the core temperature of the goods (13) is measured by means of insertion sensors, which are provided for activating a constant maintenance of the temperature of the goods slightly above its freezing temperature, preferably between 0 and +2° C, by means of registration of when the goods is completely thawed.

7. Device for thawing deep-frozen goods consisting of an organic cell mass such as foodstuffs, wherein the goods (13) is kept in an atmosphere with a predetermined degree of humidity, and heat is supplied to the goods by means of airflowing into the goods during registration of the temperature of the goods until a predetermined final temperature of the goods has been obtained, at which it is thawed, and with storage at this temperature until it is further transported for further preparation,
**characterized in that** it comprises a space (5) for enclosing the goods (13), equipment which is connected to the space for maintaining the air flow, the degree of humidity and the surface temperature of the goods and which consists of fan unit (16), radiator and cooling battery (17/18) and at least one diffusor (19) for hot steam which is connected to a steam generator, temperature measuring sensors for measuring the surface temperature of the goods (22/24/25, 26), gauge (27) for the degree of humidity and gauge (25/26) for the temperature of the atmosphere of the space, which measuring equipment is connected to a computerized control device which is adapted for controlling said operation of equipment for maintenance of predetermined, set measurement results.

8. Device according to claim 7,
**characterized in that** the surface temperature of the goods (13) is constituted by temperature sensors (22) are provided for bearing against the surface of the goods and with shielding from the surrounding atmosphere.

9. Device according to claim 7,
**characterized in that** the measuring equipment for measuring the surface temperature of the goods (13) is constituted by radiation sensitive temperature sensors (24) which are adapted to receive heat radiation from the surface of the goods.

10. Device according to claim 7,
**characterized in that** the surface temperature sensors (25, 26) are adapted to register the difference between air which flows towards the goods and air which flows from the goods and by that is cooled and that the control device is adapted to estimate the surface temperature of the goods on the basis of said difference.

## Patentansprüche

1. Verfahren zum Auftauen von tiefgefrorenen Waren in einem isolierten Raum (5), die Waren bestehen aus einer organischen Zellmasse, z.B. Lebensmittel, wobei die Waren (13) in einer Atmosphäre mit einem vorbestimmten Feuchtigkeitsgrad aufbewahrt werden und Wärme zu den Waren, durch Mittel um Luft in die Waren hinein fliesen zu lassen, zugeführt wird, wobei die Temperatur der Waren erfasst wird und die Wärmezufuhr aufhört, wenn eine vorbestimmte Schlusstemperatur der Waren erreicht wird, bei welcher die Waren aufgetaut sind, und wonach die Waren bei dieser Temperatur aufbewahrtet werden, bis sie zur weiteren Aufbereitung weitertransportiert werden,
**dadurch gekennzeichnet,**
**dass** die atmosphärische Feuchtigkeit der Atomsphäre des Raums (5) bei der vorbestimmten Temperatur gehalten wird, durch Einspritzung von Wasserdampf mit einer Temperatur von im Wesentlichen 80 °C in den Raum herein, in einem Prozess, der durch Mittel zur Messung der atmosphärischen Feuchtigkeit gesteuert wird,
**dass** die Oberflächentemperatur der Waren (13) durch Temperatursensoren fortlaufend erfasst wird, und
**dass** die Temperatur der Atmosphäre durch Abkühlung bzw. Erhitzung des Luftflusses gesteuert wird, durch Mittel eines Arbeitsablaufs der Abkühlungs- und der Erhitzungseinheiten (17, 18) des Luftflusses, wobei der Arbeitsablauf durch das Mittel der genannten Erfassung der Oberflächentemperatur der Waren (13) gesteuert und derart eingestellt wird, dass die Oberflächentemperatur der Waren innerhalb eines vorbestimmten Temperaturbereich gehalten wird, welcher in der Nähe der Gefriertemperatur der Waren, vorzugsweise zwischen -5 °C und +5 °C, ist, während der Wert der atmosphärischen Feuchtigkeit durch Mittel zur Steuerung des Dampfeinspritzungsprozesses beibehalten wird.

2. Verfahren gemäß Anspruch 1, **dadurch gekennzeichnet, dass**
eine Erfassung der Oberflächentemperatur der Waren (13), die durch ein Mittel zur kontaktlosen Messung der Temperatur, die durch ein Mittel zur strahlungsempfindlichen Sensoren (24), ausgeführt wird

3. Verfahren gemäß Anspruch 1, **dadurch gekennzeichnet, dass**
die Erfassung der Oberflächentemperatur der Waren (13) durch Mittel zur Messung der Temperatur des Luftflusses erfasst wird, welcher zur Strömung über die Oberfläche der Waren eingestellt geworden ist, und in dem Zusammenhang gekühlt wird.

4. Verfahren gemäß Anspruch 3, **dadurch gekennzeichnet, dass**
die Temperatur des genannten Luftflusses, einerseits wenn der Luftfluss gegen die Waren (13) fließt und anderseits, wenn der Luftfluss an den Waren vorbei geströmt ist, gemessen wird, wobei die Oberflächentemperatur der Waren, durch Mittel zur Erfassung der beiden gemessenen Temperaturen, deren Unterschied und der Intensität des Luftflusses geschätzt wird.

5. Verfahren gemäß Anspruch 1, **dadurch gekennzeichnet, dass**
die Oberflächentemperatursensoren (22) an der Oberfläche der Waren anliegen.

6. Verfahren gemäß eines der Ansprüche 1-5, **dadurch gekennzeichnet, dass** die Kerntemperatur der Waren (13) durch Mittel zur Einführungssensoren, gemessen wird, welche zur Auslösung einer leicht über die Gefriertemperatur der Waren konstanten Temperaturaufrechthaltung durch mittel zur Erfassung wenn die Waren vollständig aufgetaut sind, vorgesehen sind, vorzugsweise zwischen 0 und +2 °C.

7. Anordnung zum Auftauen von tiefgefrorenen Waren, welche aus einer organischen Zellmasse, z.B. Lebensmittel, bestehen, wobei die Waren (13) in einer Atmosphäre mit einem vorbestimmten Feuchtigkeitsgrad aufbewahrt werden und Wärme durch Mittel eines Luftfluss in die Waren hinein, zugeführt wird, wobei die Temperatur der Waren erfasst wird und die Wärmezufuhr aufhört, wenn eine vorbestimmte Schlusstemperatur der Waren erreicht wird, bei welcher die Waren aufgetaut sind, und wonach die Waren bei dieser Temperatur aufbewahrtet werden, bis sie zur weiteren Aufbereitung weitertransportiert werden,
**dadurch gekennzeichnet,**
**dass** die Anordnung einen Raum (5) zur Einkapslung der Waren (13) umfasst, wobei eine Ausrüstung zur Aufrechthaltung des Luftflusses, des Feuchtigkeitsgrads und der Oberflächentemperatur der Waren, an dem Raum angeschlossen ist, wobei die Ausrüstung eine Lüftungseinheit (16), eine Heizungs- und Abkühlungsbatterie (17, 18) und zumindest einen an heißen Dampf angepassten Diffusor (19), welcher zu einem Dampferzeuger angeschlossen ist, Temperaturmesssensoren zur Messung der Oberflächentemperatur der Waren (21, 24, 25, 26), Anzeige (27) des Feuchtigkeitsgrads und Anzeige (25, 26) der Atmosphäretemperatur des Raumes umfasst, wobei die Messausrüstung an ein computerbasiertes Steuergerät angeschlossen ist, welches zur Steuerung des genannten Arbeitsablaufs der Ausrüstung zur Aufrechthaltung der vorbestimmten Gruppe von Messergebnisse, vorgesehen ist.

8. Verfahren gemäß Anspruch 7, **dadurch gekennzeichnet, dass**
die Oberflächentemperatur der Waren (13) durch Temperatursensoren (22) gemessen wird, welche geschützt von der umgebenden Atmosphäre zum Anliegen an der Oberfläche der Waren angeordnet sind.

9. Verfahren gemäß Anspruch 7, **dadurch gekennzeichnet, dass**
die Messausrüstung zur Messung der Oberflächentemperatur der Waren (13) aus strahlungsempfindlichen Temperatursensoren (24) gebildet wird, welche zur Aufnahme von Wärmestrahlung von der Oberfläche der Waren angepasst sind.

10. Verfahren gemäß Anspruch 7, **dadurch gekennzeichnet, dass** die Oberflächentemperatursensoren (25, 26) angepasst sind, den Unterschied zwischen der Luft, die zu den Waren strömt und der Luft, die von den Waren strömt, und **dadurch** gekühlt wird, zu erfassen, und dass das Steuergerät zur Schätzung der Oberflächentemperatur der Waren anhand von genannten Unterschied angepasst ist.

## Revendications

1. Procédé pour décongeler des produits surgelés dans une espace isolé (5), lesquels produits sont constitués d'une masse de cellules organiques, notamment des aliments, dans lequel on maintient les produits (13) dans une atmosphère d'un degré prédéterminé d'humidité et où de la chaleur est fournie aux produits à l'aide d'air s'écoulant dans les produits pendant l'enregistrement de la température des produits jusqu'à ce que l'on obtienne une température finale prédéterminée des produits, à laquelle ils sont décongelés, et en les conservant à cette température jusqu'à ce qu'ils soient encore transportés pour une autre préparation,
**caractérisé en ce que** l'humidité de l'atmosphère dans l'espace (5) est maintenue à la valeur prédéterminée en injectant de la vapeur d'eau dans l'espace à une température essentiellement de 80 °C dans un processus qui est commandé par mesure de l'humidité atmosphérique, la température de surface des produits (13) est mesurée en continu à l'aide de capteurs de température et la température de l'atmosphère est commandée en refroidissant l'écoulement d'air ou alternativement en chauffant celui-ci par fonctionnement d'unités (17/18) qui génèrent du froid et de la chaleur, respectivement, pour l'écoulement d'air, dans un processus qui est commandé par ladite mesure de la température de surface des produits (13) et ajusté pour que la température de surface des produits soit maintenue dans une plage de températures prédéterminée qui soit proche de la température de congélation des produits, de préférence entre -5 ° C et +5 ° C, pendant le maintien de la valeur prédéterminée pour l'humidité atmosphérique au moyen de la commande du processus d'injection de vapeur d'eau.

2. Procédé selon la revendication 1,
**caractérisé en ce que** l'enregistrement de la température de surface des produits (13) est effectué par mesure de la température sans contact à l'aide de capteurs sensibles aux rayonnements (24).

3. Procédé selon la revendication 1,
**caractérisé en ce que** la température de surface des produits (13) est enregistrée par mesure de la température de l'écoulement d'air qui a été dirigé pour balayer la surface des produits et est de ce fait refroidi.

4. Procédé selon la revendication 3,
**caractérisé en ce que** la température dudit écoulement d'air est mesurée, d'une part, lorsque l'écoulement d'air est soufflé vers les produits (13) et, d'autre part, lorsqu'il est passé au-delà des produits, après quoi la température de surface des produits est évaluée par enregistrement des deux températures mesurées, de la différence entre elles et de l'intensité de l'écoulement d'air.

5. Procédé selon la revendication 1,
**caractérisé en ce que** les capteurs de température de surface (22) portent contre la couche de surface des produits.

6. Procédé selon l'une quelconque des revendications 1 à 5,
**caractérisé en ce que** la température au coeur des produits (13) est mesurée à l'aide de capteurs d'insertion, qui sont fournis pour activer un maintien constant de la température des produits légèrement au-dessus de leur température de congélation, de préférence entre 0 et +2° C, par enregistrement du moment où les produits sont complètement décongelés.

7. Dispositif pour décongeler des produits surgelés constitués d'une masse de cellules organiques, notamment des aliments, dans lequel on maintient les produits (13) dans une atmosphère d'un degré prédéterminé d'humidité et on fournit de la chaleur aux produits au moyen d'air s'écoulant dans les produits pendant l'enregistrement de la température des produits jusqu'à ce que l'on obtienne une température finale des produits prédéterminée, à laquelle ils sont décongelés, et en les conservant à cette température jusqu'à ce qu'ils soient encore transportés pour une autre préparation,
**caractérisé en ce qu'**il comprend un espace (5) pour enserrer les produits (13), un équipement qui est raccordé à l'espace pour maintenir l'écoulement d'air, le degré d'humidité et la température de surface des produits et qui est constitué d'une unité de ventilateur (16), d'un radiateur et d'une batterie de refroidissement (17/18) et d'au moins un diffuseur (19) pour vapeur chaude qui est raccordé à un générateur de vapeur d'eau, des capteurs de mesure de température pour mesurer la température de surface des produits (22/24/25, 26), une jauge (27) pour le degré d'humidité et une jauge (25/26) pour la température de l'atmosphère de l'espace, lequel équipement de mesure est raccordé à un dispositif de commande informatisé qui est adapté pour commander ledit fonctionnement de l'équipement pour le maintien desdits résultats de mesure établis prédéterminés.

8. Dispositif selon la revendication 7,
**caractérisé en ce que** la température de surface des produits (13) est constituée de capteurs de température (22) mis en oeuvre pour porter contre la surface des produits et être protégés de l'atmosphère environnante.

9. Dispositif selon la revendication 7,
**caractérisé en ce que** l'équipement de mesure pour mesurer la température de surface des produits (13) est constitué de capteurs de température sensibles au rayonnement (24) qui sont adaptés pour recevoir un rayonnement thermique de la surface des produits.

10. Dispositif selon la revendication 7,
**caractérisé en ce que** les capteurs de température de surface (25, 26) sont adaptés pour enregistrer la différence entre l'air qui s'écoule vers les produits et l'air qui s'écoule depuis les produits et est ainsi refroidi et le dispositif de commande est adapté pour évaluer la température de surface des produits sur la base de ladite différence.
